# EUROPEAN PATENT SPECIFICATION

(11) **EP 1 281 223 B1**
(45) Date of publication and mention of the grant of the patent: **11.05.2016**
(21) Application number: 01929422.2
(22) Date of filing: 05.03.2001
(51) Int. Cl.: H01H 31/00, H02B 13/035

(54) **GAS-INSULATED SWITCHGEAR APPARATUS**
GASISOLIERTE SCHALTANLAGE
APPAREILLAGE DE COMMUTATION ISOLE PAR GAZ

(30) Priority: 17.03.2000 IT MI000570
(43) Date of publication of application: 05.02.2003
(73) Proprietor: ABB S.p.A., 20124 Milano (IT)
(72) Inventor: PIAZZA, Costante, 26900 Lodi (IT); GUERRA, Giuliano, 15067 Novi Ligure (IT); GRANATA, Carlo, 20070 Cavenago d'Adda (IT)
(74) Representative: De Bortoli, Eros
(86) International application number: PCT/EP2001/002583
(87) International publication number: WO 2001/069742

(56) References cited:
- WO-A-99/60591
- DE-C- 19 732 487
- US-A- 4 414 451

## Description

The present invention relates to a gas-insulated switchgear apparatus for high- and medium-voltage applications having improved functions and characteristics. The expression "apparatus for high and medium voltage" is used to designate an apparatus for applications with operating voltages above 1000 volts.

In particular, the apparatus according to the invention, by virtue of its innovative structure, allows to optimize the execution of the required electrical maneuvers according to a solution which is at once simple, effective and compact.

It is known from the state of the art that electrical maneuvers for interruption and disconnection in gas-insulated switchgear apparatuses are performed by means of the translation movement of one or more movable contacts which can couple/uncouple with respect to corresponding fixed contacts. A significant drawback of known types of device is due to the fact that in order to perform the various maneuvers, for example for disconnection on the input line or on the output line, they use dedicated components which are structurally separate and distinct with respect to each other; in this manner, the number of components used to implement the various maneuvers is large and entails an increase in the overall dimensions and volume of the apparatus, with a consequent additional burden in terms of costs.

Furthermore, the contacts are moved by using actuation devices which generally comprise actuators of the mechanical or hydraulic type, which require complex kinematic systems for transmitting motion to the movable contact. In particular, the disconnection maneuver requires the coordinated movement of one or more movable contacts so that the opening/closure of the disconnection contacts occurs according to the intended sequence. This usually requires complicated coupling mechanism and/or complicated actuation and control systems, especially when disconnection occurs on multiple-bar systems. Owing to the mechanical complexity of the movement elements and to the large number of components used, many maintenance interventions are necessary in order to preserve nominal behavior and ensure repeatability of performance.

This structural complexity has an even more negative impact when the various interruption and disconnection apparatuses are used in the provision of substations. In these situations, and according to a solution of a more conventional type, it is in fact necessary to use a large number of mutually independent components even to provide a minimal configuration; accordingly, the substations are unsatisfactory in practical use mainly due to their high cost, space requirements and need for frequent maintenance interventions. Furthermore, these substations do not have a modular structure which makes them appropriately flexible in their applications and easy to implement according to the various application requirements.

Switchgear apparatuses are also known which allow to obviate some of the above noted drawbacks; an example in this regard is described in US patent 5,796,060.

Patent document DE-C-19732487 describes a switchgear apparatus, according to the preamble of the following claim 1, in which the moveable contacts of the interruption unit and of the disconnecting unit move along parallel axes.

The aim of the present invention is to provide a gas-insulated switchgear apparatus for high- and medium-voltage applications which is capable of integrating the functions that, in the current state of the art, are performed by multiple components which are structurally mutually distinct, with a constructive structure which is particularly compact and small, so as to significantly reduce its space requirements.

Within the scope of this aim, an object of the present invention is to provide a gas-insulated switchgear apparatus for high- and medium-voltage applications which allows high flexibility and simplicity in performing the required electrical maneuvers. Another object of the present invention is to provide a gas-insulated switchgear apparatus for high- and medium-voltage applications which has a reduced mechanical complexity.

Another object of the present invention is to provide a gas-insulated switchgear apparatus for high- and medium-voltage applications which is easily suitable for providing different application configurations, particularly for implementing substations with a single and/or double busbar system.

Another object of the present invention is to provide a gas-insulated switchgear apparatus for high- and medium-voltage applications which is highly reliable, relatively easy to manufacture and at competitive costs.

This aim, these objects and others which will become apparent hereinafter are achieved by a gas-insulated switchgear apparatus, according to the following claim 1.

The apparatus according to the invention can be either of the segregated-phase or combined-phase type, for a simple or multiple busbar system, with single-pole or three-pole actuation.

The apparatus according to the invention therefore has an extremely compact structure which integrates in a single volume both the interruption elements and the disconnection elements, according to a solution which allows in any case to perform the required electrical maneuvers simply and effectively.

Further characteristics and advantages will become apparent from the description of some preferred but not exclusive embodiments of a switchgear apparatus according to the invention, illustrated only by way of non-limitative example in the accompanying drawings, wherein:
Figure 1 is a sectional view of a first embodiment of a switchgear apparatus according to the invention;
Figure 2 is a sectional view of a second embodiment of a switchgear apparatus according to the invention;
Figures 3a-3c are schematic views of some possible electrical maneuvers that can be performed with the apparatus of Figure 1;
Figures 4a-4f are schematic views of some possible electrical maneuvers that can be performed with the apparatus of Figure 2.

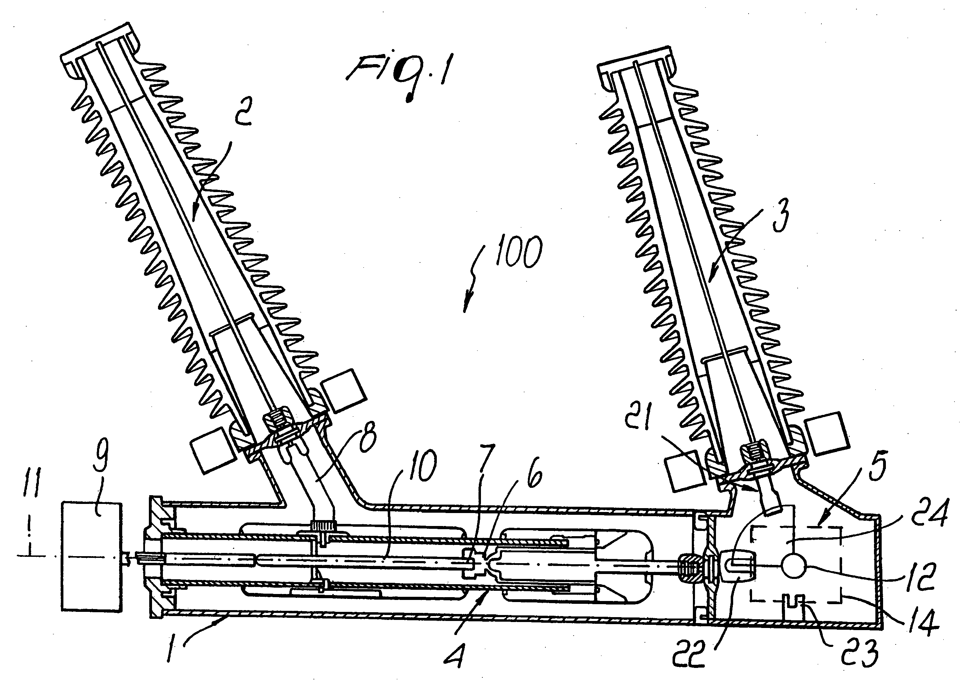

With reference to Figure 1, the switchgear apparatus according to the invention, generally designated by the reference numeral 100, comprises a casing 1 which accommodates at least a first connection terminal 2 and a second connection terminal 3; for example, said terminals can be electrically connected to a phase of a power supply line and to a load, such as a power transformer.

An interruption unit 4 and a disconnection unit 5 are furthermore arranged inside the casing 1, which contains an insulating gas.

The interruption unit 4, which is electrically connected to the first terminal 2, for example by means of an electrical connection 8, comprises an interruption chamber which accommodates a fixed contact 6 and a movable contact 7 which is operatively controlled by first actuation means. Advantageously, the first actuation means comprise an electric motor 9 with position control, preferably a rotary servomotor. In this case, the movable contact 7 is operatively connected to the motor 9 by means of an actuation rod 10 and a kinematic mechanism which is suitable to convert the rotation of the motor shaft into a translation movement of the movable contact 7 along the longitudinal axis 11 of the interruption chamber.

The disconnection unit 5 comprises at least a first fixed contact 21 which is connected to the electrical terminal 3, a second fixed contact 22 which is electrically connected to the interruption unit 4, and a third fixed contact 23 which is at ground voltage. In the embodiment shown in Figure 1, the fixed contact 23 is connected to the casing 1 placed at ground voltage and lies on the same plane on which the fixed contacts 21 and 22 are arranged. The disconnection unit 5 furthermore comprises at least one first movable contact 24 which is operatively connected to second rotary actuation means and rotates with them, so that it can couple to at least one of the fixed contacts 21, 22 and 23.

Advantageously, in the embodiment shown in Figure 1, the second rotary actuation means comprise a rotating shaft 12 actuated by a motor with position control, preferably a servomotor; this motor, schematically represented in figure 1 in dotted-line and indicated by the reference numeral 14, is operatively connected to the casing 1, externally to it. The disconnection unit 5 furthermore comprises a single movable contact 24 which can be coupled to the three fixed contacts 21, 22 and 23. Said movable contact 24, constituted for example by a blade which has a profile shaped like a circular sector, is fixed to the rotating shaft 12 substantially at right angles to the axis of said shaft. In this manner, the movable contact 24 rotates rigidly with the shaft 12, with the fixed contacts 21, 22 and 23 arranged on its rotation plane. In this manner, the movable contact 24 rotates about the axis of the shaft 12 arranged substantially at right angles to the longitudinal axis 11 of the interruption chamber. Clearly, for the sake of simplicity, when the description mentions the relative position of the fixed contact and of a movable contact, reference is always meant to the relative position of the ends of the fixed contact and of the movable contact that can be coupled thereto.

Alternatively, depending on the various requirements of application, it is possible to arrange the fixed contacts 21, 22 and 23 on multiple mutually offset planes, using in this case multiple movable contacts which are fixed to the actuation shaft 12; in this case, the movable contacts rotate on different planes and are arranged at appropriate angles to each other so as to allow electrical connections between the pairs of contacts according to the intended sequences. The solution shown in Figure 1 is particularly advantageous because the longitudinal axis 11 of the interruption chamber 4 is arranged substantially at right angles to the rotation axis of the actuation shaft 12; in this manner, the maneuvers of the disconnection unit occur by imparting a rotation to the shaft 12 and turning the movable contact about the axis of said shaft, while the opening/closure of the interruption unit 4 occurs along the longitudinal axis 11. This allows optimum distribution of the space occupied inside the casing 1, with a solution which allows extreme flexibility of the executable electrical maneuvers and of the connections that can be provided between said apparatus 100 and elements arranged externally thereto, for example loads to be supplied, power supply lines, et cetera. Furthermore, the arrangement of the motor of the disconnection unit along the space occupied by the extension of the body of the casing 1 helps to further compact the apparatus.

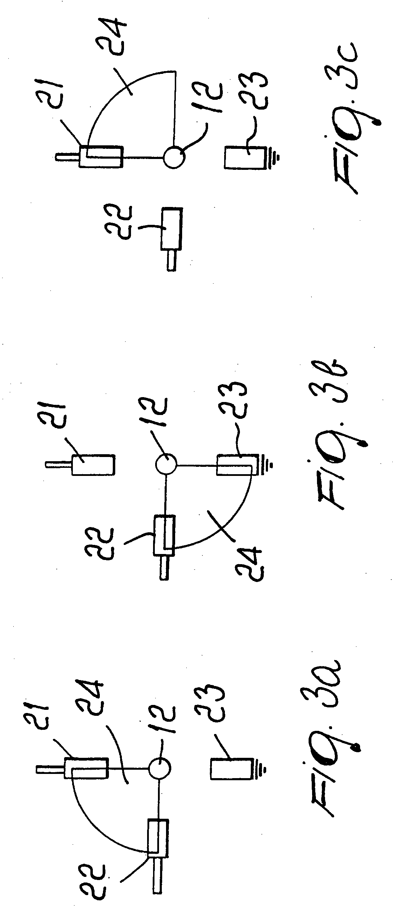

With this arrangement it is possible to perform various electrical maneuvers in an extremely simple and flexible way. For example, as shown in Figures 3a-3c, it is possible to have:
-- the contact 24 simultaneously coupled to the contacts 21 and 22 while the contact 23 is uncoupled (Figure 3a);
-- the contact 24 coupled to the contacts 22 and 23 while the contact 21 is uncoupled (Figure 3b);
-- the contact 24 coupled to the contact 21 while the contacts 22 and 23 are uncoupled (Figure 3c).

Furthermore, the use of a motor with position control and particularly of a rotary servomotor allows to ensure accuracy and repeatability of the interruption and disconnection maneuvers, with a constructive solution which is simplified with respect to the actuation means of the known art; accordingly, space occupation is also reduced. Further, the use of a servomotor allows to have considerable power available with short delivery times.

Position control can be performed, both for the motor 9 and for the motor 14 that actuates the shaft 12, by means of a position sensor located on the motor, which sends to a control unit, operatively associated to the motor itself, information related to the movement of said motor. Position control, particularly for interruption maneuvers, can also be performed by a movable contact position sensor, which sends to the control unit information related to the actual position of the movable contact. Said position sensor can be simply a stroke limit device which signals to the control unit that the required maneuver has been completed. By means of the control unit it is in fact possible, for example, to program in a simple and flexible manner the rule of motion of the moving parts according to the actuation and to the type of fault possibly detected. In particular, it is possible to predefine the precision of the positioning of the movable contact of the interruption units both for opening and for closure, reducing the risks of damage currently linked to overrun problems.

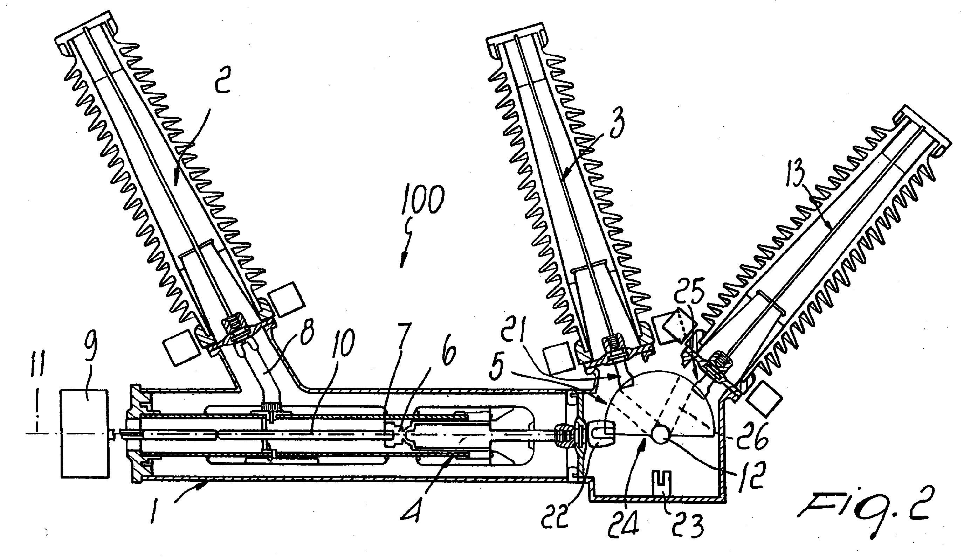

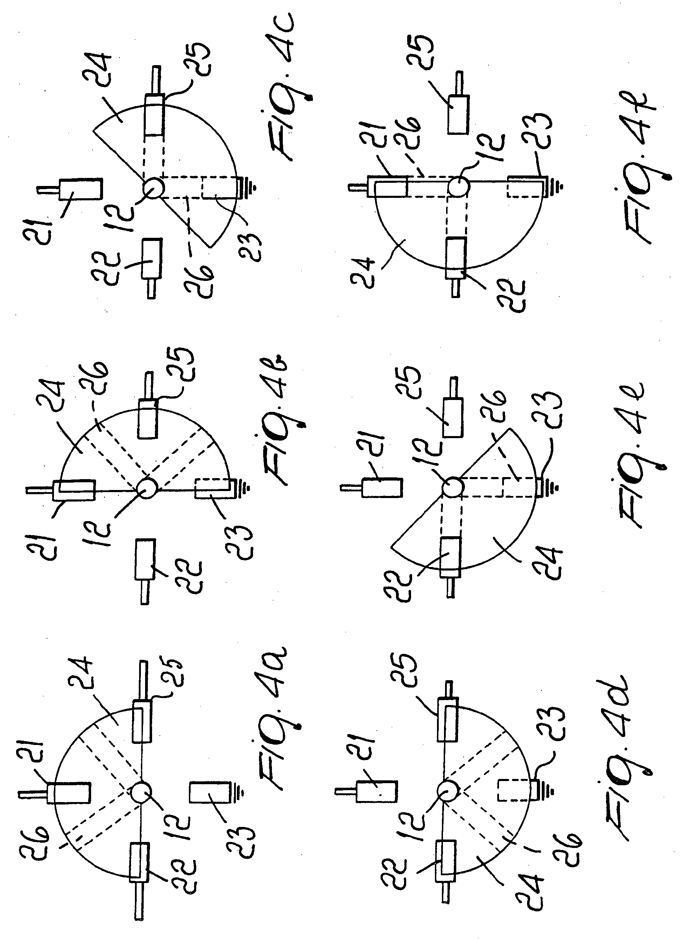

Figure 2 illustrates a second embodiment of the switchgear apparatus 100 which is particularly suitable for use with a three-phase system with double busbars. In this case, the casing 1 accommodates a third connection terminal 13 and the disconnection unit comprises a fourth fixed contact 25 which is connected to said terminal 13; correspondingly, the unit 5 comprises at least a first movable contact 24 and a second movable contact 26 which are keyed on the shaft 12 in such a position that the first fixed contact 21, the second fixed contact 22 and the fourth fixed contact 25 lie on the rotation plane of the first movable contact 24 and the third contact 23 lies on the rotation plane of the second movable contact 26. As shown schematically in Figures 4a-4f, said movable contact 26 is for example configured as an L-shaped blade with substantially equal sides.

With this constructive solution it is possible to perform various electrical maneuvers in an extremely simple and flexible manner. For example, as shown in Figures 4a-4f, it is possible to have:
-- the contact 24 simultaneously coupled to the contacts 21, 22 and 25, while the contacts 26 and 23 are uncoupled (Figure 4a);
-- the contact 24 coupled to the contacts 21 and 25, while the contacts 22, 23 and 26 are uncoupled (Figure 4b);
-- the contact 24 coupled to the contact 25, while the contacts 23-26 are coupled to each other and the contacts 21 and 22 are uncoupled (Figure 4c);
-- the contact 24 coupled to the contacts 22 and 25, while the contacts 21, 23 and 26 are uncoupled (Figure 4d);
-- the contact 24 coupled to the contact 22, while the contacts 23-26 are coupled to each other and the contacts 21 and 25 are uncoupled (Figure 4e);
-- the contact 24 coupled to the contacts 21 and 22, while the contacts 23, 25 and 26 are uncoupled (Figure 4f).

In addition to these possible configurations, it is clearly possible to provide other maneuvers according to the various requirements of application.

The apparatus thus conceived, both in the configuration shown in Figure 1 and in the configuration shown in Figure 2, by virtue of its structural compactness and functional flexibility, is particularly suitable for use in a substation for electric power transmission and distribution with a three-phase single-busbar system and with many application configurations.

In particular, in the embodiment shown in Figure 2 it is possible, for example, to connect the terminals 13 (or 3) and 3 (or 13), respectively in input and in output to a phase of a main power supply line, and to connect the terminal 2 to a load, for example a power transformer; or to connect the terminal 3 (or 13) in input to the power supply phase, the terminal 13 (or 3) to a load, and the terminal 2 in output to said phase. Another possible alternative is to connect the terminal 2 in input to the power supply phase and the terminals 3 and 13 to two corresponding loads, for example two power transformers.

Accordingly, the present invention also relates to a substation for the transmission and distribution of electric power, said substation being connected to a three-phase power supply line and being characterized in that it comprises at least one switchgear apparatus according to the invention.

Another important advantage of the invention is the fact that the apparatuses used in the substation may be of the single-pole actuation type, in which actuation motors are provided on each individual phase in order to perform the disconnection and interruption maneuvers; alternatively, and according to a solution which is particularly effective as regards space occupation and costs, they can be of the type with three-pole actuation, in which the energy to perform the disconnection maneuver on the three phases of the apparatus is provided by a single motor with position control 14 which is mechanically coupled to the disconnection units of each individual phase. In this case, the motor 14 is arranged at one of the apparatuses 100 and is connected to the three disconnection units by means of a single through shaft on which the various movable contacts are arranged appropriately.

Furthermore, a similar actuation system with single three-pole actuation can also be used for the maneuver of the interruption units; in this case it is in fact sufficient to use a single motor 9, arranged at an apparatus 100, which is mechanically connected to the actuation rods of the movable contacts of the three interruption units arranged side by side.

In practice it has been found that the switchgear apparatus according to the invention fully achieves the intended aim and objects, since it has a simple and compact structure in which the execution of the electrical maneuvers occurs very simply and effectively, while ensuring accuracy and repeatability of said maneuvers. Furthermore, the apparatus has a constructive structure which allows to transport it directly to an installation site in an already preassembled configuration.

The gas-insulated switchgear apparatus thus conceived is susceptible of modifications and variations, all of which are within the scope of the inventive concept; all the details may furthermore be replaced with technically equivalent elements. In practice, the materials used, so long as they are compatible with the specific use, as well as the dimensions, may be any according to the requirements and the state of the art.

## Claims

1. A gas-insulated switchgear apparatus (100), comprising:
- a casing (1), which accommodates at least a first connection terminal (2) and a second connection terminal (3);
- an interruption unit (4), which is electrically connected to the first terminal and comprises an interruption chamber, which accommodates a fixed contact (6) and a movable contact (7) which is operatively controlled by first actuation means (9), said first actuation means moving said movable contact with a translational movement along a first longitudinal axis (11);
- a disconnection unit (5), which comprises at least a first fixed contact (21) which is electrically connected to the interruption unit, a second fixed contact (22) which is connected to the second terminal, a third fixed contact (23) at ground voltage, and at least one first movable contact (24), which can be coupled to at least one of said fixed contacts, said first movable contact being fixed to second rotating actuation means (12, 14) and rotating rigidly with said means, said first or second actuation means comprising a motor with position control,
**characterized in that** the rotation axis of said second actuation means is substantially perpendicular to the first longitudinal axis (11), along which the movable contact (7) of said interruption unit (4) is moved with a translational movement.

2. The switchgear apparatus according to claim 1, **characterized in that** the disconnection unit comprises a single movable contact and **in that** said first, second and third fixed contacts lie on the rotation plane of the movable contact.

3. The switchgear apparatus according to claim 1, **characterized in that** the casing accommodates a third connection terminal and **in that** the disconnection unit comprises a fourth fixed contact (25), which is connected to said third terminal, and at least one first and second movable contacts (24, 26) which are fixed to said second actuation means (12, 14), said first, second and fourth fixed contacts (21, 22, 25) being arranged on the rotation plane of said first movable contact (24), the third fixed contact (23) being arranged on the rotation plane of said second movable contact (26).

4. The switchgear apparatus according to one or more of the preceding claims, **characterized in that** the first movable contact (24) is constituted by a blade which is keyed on said second actuation means (12, 14) and is substantially perpendicular to the rotation axis of said second actuation means.

5. The switchgear apparatus according to one or more of the preceding claims, **characterized in that** said first actuation means comprise a rotary servomotor (9).

6. The switchgear apparatus according to one or more of the preceding claims, **characterized in that** said second actuation means comprise a rotary servomotor (14) and a rotation shaft (12) on which said movable contacts (24, 26) are keyed.

7. A substation for transmitting and distributing electric power, suitable for connection to a three-phase power supply line, **characterized in that** it comprises at least one switchgear apparatus (100) according to one or more of the preceding claims.

8. A substation for transmitting and distributing electric power in high- and/or medium-voltage applications, suitable for connection to a three-phase power supply line, **characterized in that** it comprises, for each phase of the power supply line, at least one switchgear apparatus (100) according to one or more of claims 1 to 6, and **in that** said second rotating actuation means comprise a single motor (14) with position control which is suitable to actuate the disconnection units (5), each of which belongs to a corresponding switchgear apparatus (100).

9. A substation for transmitting and distributing electric power in high- and/or medium-voltage applications according to claim 8, **characterized in that** the first actuation means comprise a single motor (9) with position control which is suitable to actuate the movable contacts (7) of the interruption units (4), each of which belongs to a corresponding switchgear apparatus (100).

## Patentansprüche

1. Gasisolierte Schaltgerätevoruchtung (100), aufweisend:
- ein Gehäuse (1), das zumindest einen ersten Verbindungsanschluss (2) und einen zweiten Verbindungsanschluss (3) beherbergt;
- eine Unterbrechungseinheit (4), die elektrisch mit dem ersten Anschluss verbunden ist und eine Unterbrechungskammer aufweist, die einen Festkontakt (6) und einen beweglichen Kontakt (7) aufweist, der operativ durch eine erste Aktoreinrichtung (9) gesteuert wird, wobei die erste Aktoreinrichtung den beweglichen Kontakt durch eine translatorische Bewegung entlang einer ersten Längsachse (11) bewegt;
- eine Trennungseinheit (5), die zumindest einen ersten Festkontakt (21), der elektrisch mit der Unterbrechungseinheit verbunden ist, einen zweiten Festkontakt (22), der mit dem zweiten Anschluss verbunden ist, einen dritten Festkontakt (23) bei Erdenspannung, und zumindest einen ersten beweglichen Kontakt (24), der mit zumindest einem von den Festkontakten verbunden werden kann, aufweist, wobei der erste bewegliche Kontakt mit zweiten drehenden Aktoreinrichtungen (12, 14) verbunden ist und fest mit den Einrichtungen rotiert, und wobei die ersten oder zweiten Aktoreinrichtungen einen Motor mit Positionssteuerung aufweisen,
**dadurch gekennzeichnet, dass** die Rotationsachse der zweiten Aktoreinrichtungen im Wesentlichen rechtwinklig zu der ersten Längsachse (11) ist, entlang der der bewegliche Kontakt (7) der Unterbrechungseinheit (4) mit einer translatorischen Bewegung bewegt wird.

2. Schaltgerätevorrichtung nach Anspruch 1, **dadurch gekennzeichnet, dass** die Trennungseinheit einen einzigen beweglichen Kontakt aufweist, und dass die ersten, zweiten und dritten Festkontakte auf der Rotationsebene des beweglichen Kontakts liegen.

3. Schaltgerätevorrichtung nach Anspruch 1, **dadurch gekennzeichnet, dass** das Gehäuse einen dritten Verbindungsanschluss beherbergt, und dass die Trennungseinheit einen vierten Festkontakt (25), der mit dem dritten Anschluss verbunden ist, und zumindest einen ersten und zweiten beweglichen Kontakt (24, 26), die an den zweiten Aktoreinrichtungen (12, 14) befestigt sind, aufweist, wobei die ersten, zweiten und vierten Festkontakte (21, 22, 25) auf der Rotationsebene des ersten beweglichen Kontakts (24) angeordnet sind und der dritte Festkontakt (23) auf der Rotationsebene des zweiten beweglichen Kontakts (26) angeordnet ist.

4. Schaltgerätevorrichtung nach einem oder mehreren der vorgenannten Ansprüche, **dadurch gekennzeichnet, dass** der erste bewegliche Kontakt (24) durch eine Klinge gebildet wird, die auf den zweiten Aktoreinrichtungen (12, 14) verzahnt ist und im Wesentlichen rechtwinklig zu der Rotationsachse der zweiten Aktoreinrichtungen ist.

5. Schaltgerätevorrichtung nach einem oder mehreren der vorgenannten Ansprüche, **dadurch gekennzeichnet, dass** die ersten Aktoreinrichtungen einen drehenden Servomotor (9) aufweisen.

6. Schaltgerätevorrichtung nach einem oder mehreren der vorgenannten Ansprüche, **dadurch gekennzeichnet, dass** die zweiten Aktoreinrichtungen einen drehenden Servomotor (14) und eine Drehwelle (12), auf der die beweglichen Kontakte (24, 26) verzahnt sind, aufweist.

7. Unterstation zum Übertragen und Verteilen elektrischen Stroms, die geeignet ist, mit einer dreiphasigen Stromzuführleitung verbunden zu werden, **dadurch gekennzeichnet, dass** sie zumindest eine Schaltgerätevorrichtung (100) nach einem oder mehreren der vorgenannten Ansprüche aufweist.

8. Unterstation zum Übertragen und Verteilen elektrischen Stroms zu/in Hoch- und/oder Mittelspannungsanwendungen, die geeignet ist, mit einer dreiphasigen Stromzuführleitung verbunden zu werden, **dadurch gekennzeichnet, dass** sie für jede Phase der Stromzuführleitung zumindest eine Schaltgerätevorrichtung (100) nach einem oder mehreren der Ansprüche 1 bis 6 aufweist, und dass die zweiten drehenden Aktoreinrichtungen einen einzelnen Motor (14) mit Positionssteuerung aufweisen, der geeignet ist, die Trennungseinheiten (5) anzusteuern, von denen jede zu einer entsprechenden Schaltgerätevorrichtung (100) gehört.

9. Unterstation zum Übertragen und Verteilen elektrischen Stroms zu/in Hoch- und/oder Mittelspannungsanwendungen nach Anspruch 8, **dadurch gekennzeichnet, dass** die ersten Aktoreinrichtungen einen einzelnen Motor (9) mit Positionssteuerung aufweisen, der geeignet ist, die beweglichen Kontakte (7) der Unterbrechungseinheiten (4) anzusteuern, von denen jede zu einer entsprechenden Schaltgerätevorrichtung (100) gehört.

## Revendications

1. Appareil de commutation isolé par gaz (100), qui comprend :
- une enceinte (1), qui contient au moins une première borne de connexion (2) et une seconde borne de connexion (3) ;
- une unité d'interruption (4), qui est électriquement reliée à la première borne et qui comprend une chambre d'interruption, qui contient un contact fixe (6) et un contact mobile (7) qui est contrôlé, en fonctionnement, par un premier moyen d'actionnement (9), ledit premier moyen d'actionnement déplaçant ledit contact mobile avec un mouvement de translation le long d'un premier axe longitudinal (11) ;
- une unité de déconnexion (5), qui comprend au moins un premier contact fixe (21) qui est relié électriquement à l'unité d'interruption, un second contact fixe (22) qui est relié à la seconde borne, un troisième contact fixe (23) à la tension de masse, et au moins un premier contact mobile (24), qui peut être relié à au moins l'un desdits contacts fixes, ledit premier contact mobile étant fixé sur un second moyen d'actionnement rotatif (12, 14) et tournant de manière rigide avec ledit moyen, ledit premier ou ledit second moyen d'actionnement comprenant un moteur à commande de position,
**caractérisé en ce que** l'axe de rotation dudit second moyen d'actionnement est sensiblement perpendiculaire au premier axe longitudinal (11), le long duquel le contact mobile (7) de ladite unité d'interruption (4) est déplacé avec un mouvement de translation.

2. Appareil de commutation selon la revendication 1, **caractérisé en ce que** l'unité de déconnexion comprend un seul contact mobile et **en ce que** lesdits premier, second et troisième contacts fixes se trouvent sur le plan de rotation du contact mobile.

3. Appareil de commutation selon la revendication 1, **caractérisé en ce que** l'enceinte contient une troisième borne de connexion et **en ce que** l'unité de déconnexion comprend un quatrième contact fixe (25), qui est relié à ladite troisième borne, et au moins un premier et un second contacts mobiles (24, 26) qui sont fixés sur ledit second moyen d'actionnement (12, 14), lesdits premier, second et quatrième contacts fixes (21, 22, 25) se trouvant sur le plan de rotation dudit premier contact mobile (24), le troisième contact fixe (23) se trouvant sur le plan de rotation dudit second contact mobile (26).

4. Appareil de commutation selon une ou plusieurs des revendications précédentes, **caractérisé en ce que** le premier contact mobile (24) est constitué d'une lame qui est clavetée sur ledit second moyen d'actionnement (12, 14) et est sensiblement perpendiculaire à l'axe de rotation dudit second moyen d'actionnement.

5. Appareil de commutation selon la revendication selon une ou plusieurs des revendications précédentes, **caractérisé en ce que** ledit premier moyen d'actionnement comprend un servomoteur rotatif (9).

6. Appareil de commutation selon une ou plusieurs des revendications précédentes, **caractérisé en ce que** ledit second moyen d'actionnement comprend un servomoteur rotatif (14) et un arbre de rotation (12) sur lequel lesdits contacts mobiles (24, 26) sont clavetés.

7. Sous-station destinée à transmettre et à distribuer une énergie électrique, adaptée pour être reliée à une ligne d'alimentation électrique triphasée, **caractérisée en ce qu'**elle comprend au moins un appareil de commutation (100) selon une ou plusieurs des revendications précédentes.

8. Sous-station destinée à transmettre et à distribuer une énergie électrique dans des applications à haute tension et/ou à tension moyenne, adaptée pour être reliée à une ligne d'alimentation électrique triphasée, **caractérisée en ce qu'**elle comprend, pour chaque phase de la ligne d'alimentation électrique, au moins un appareil de commutation (100) selon une ou plusieurs des revendications 1 à 6, et **en ce que** ledit second moyen d'actionnement rotatif comprend un seul moteur (14) muni d'une commande de position qui est adapté pour actionner les unités de déconnexion (5), qui appartiennent chacune à un appareil de commutation correspondant (100).

9. Sous-station destinée à transmettre et à distribuer une énergie électrique dans des applications à haute tension et/ ou à tension moyenne selon la revendication 8, **caractérisée en ce que** le premier moyen d'actionnement comprend un seul moteur (9) muni d'une commande de position adapté pour actionner les contacts mobiles (7) des unités d'interruption (4), qui appartiennent chacune à un appareil de commutation correspondant (100).
